# EUROPEAN PATENT SPECIFICATION

(11) **EP 1 569 404 B1**
(45) Date of publication and mention of the grant of the patent: **22.08.2007**
(21) Application number: 04004280.6
(22) Date of filing: 25.02.2004
(51) Int. Cl.: H04L 29/06, H04L 12/26

(54) **System and method for maintaining a network connection**
System und Verfahren zum Aufrechterhalten der Netzwerkverbindung
Système et méthode pour maintenir une connexion de réseau

(43) Date of publication of application: 31.08.2005
(73) Proprietor: Research In Motion Limited, Waterloo, Ontario N2L 3W8 (CA)
(72) Inventor: Dunk, Craig Allan, Guelph Ontario, N1L 1P2 (CA)
(74) Representative: Rickard, David John

(56) References cited:
- FR-A- 2 832 276
- US-A- 6 006 259
- IEEE: "rfc1122, 4.2.3.6 TCP Keep-Alives" INTERNET ENGINEERING TASK FORCE, October 1989 (1989-10), pages 101-102, XP002288037 INTERNET

## Description

The present application relates generally to computer networking and more particularly to a system and method for maintaining a network connection.

In certain network connections, such as connections made over the Hypertext Transfer Protocol ("HTTP"), it can be desired to maintain a persistent connection between the client and the web-server in order to reduce the overhead needed to reestablish the connection. However, Network Address Translation ("NAT") gateways and other equipment that lie along the connection pathway may terminate the connection in the event that the connection goes idle beyond a predefined period of time.

In order to prevent NAT gateway from terminating the connection, it is known to periodically send "keep-alive" packets from the client to the web-server. Such keep-alive packets do not actually include any transactional information and have no effect of the state of the data between the client and the web-server, and are merely used to prevent the NAT gateway from terminating the connection. It is typical to aggressively send keep-alive packets, without any regard to the actual parameters used by the NAT gateway, and thereby implement a universal strategy to keep the connection open.

However, these prior art methods of maintaining persistent connections are ideally suited to channels where bandwidth is not constrained. Thus, in bandwidth constrained mediums, such as wireless network channels, this strategy is wasteful of precious bandwidth. This prior art method is also undesirable in battery operated devices, where aggressive delivery of keep-alive packets could quickly drain the battery.

US6006259 discloses a network clustering system that optimizes its component message throughput by adaptively load balancing. The cluster, to the outside, looks like a single device and functions as an intermediary such as a gateway, a firewall or a router. It consists of a number of identical members, one of which assumes the role of a master. All members, master and non-master, are connected through physical network links. The master is able to disconnect a member if the member fails to send a keep-alive signal to the master within a determined period. The period is determined by the master from information about packet loss obtained from the members' keep-alive signals. The members are therefore reliant on the master to determined the keep-alive signal period and communicate it to them.

### General

It is an object to provide a novel a system and method for maintaining a network connection that obviates or mitigates at least one of the above-identified disadvantages of the prior art.

One aspect of the invention provides an electronic device having a network interface for communicating with a second device via a network connection carried by a physical link that includes equipment for terminating said network connection if said network connection remains idle according to a predefined time-out criterion of said equipment, said device being arranged to send keep-alive signals on said connection; characterized in that said electronic device has means for sending said keep-alive signals according to a plurality of different time intervals to determine said predefined time-out criterion of said equipment

Another aspect of the invention provides a method of determining a predefined time-out criterion in an electronic device having a network interface for communicating with a second device via a network connection carried by a physical link that includes equipment for terminating said network connection if said network connection remains idle according to a predefined time-out criterion of said equipment, said device being arranged to send keep-alive signals on said connection, the method being characterized in that it comprises: sending said keep-alive signals from the device to the equipment according to a plurality of different time intervals to determine said predefined time-out criterion of said equipment.

Further aspects and features of the present invention will be apparent from the appended claims.

### BRIEF DESCRIPTION OF THE DRAWINGS

The invention will now be described by way of example only, and with reference to the accompanying drawings, in which:
Figure 1 is a schematic representation of a system for maintaining a network connection in accordance with an embodiment of the invention;
Figure 2 is a flow chart depicting a method of maintaining a network connection in accordance with another embodiment of the invention;
Figure 3 shows the system of Figure 1 during the performance of the method in Figure 2;
Figure 4 shows set of sub-steps for performing one of the steps in the method of Figure 2; and,
Figure 5 shows the system of Figure 1 during the performance of the method in Figure 2.

### DESCRIPTION OF PREFERED EMBODIMENTS

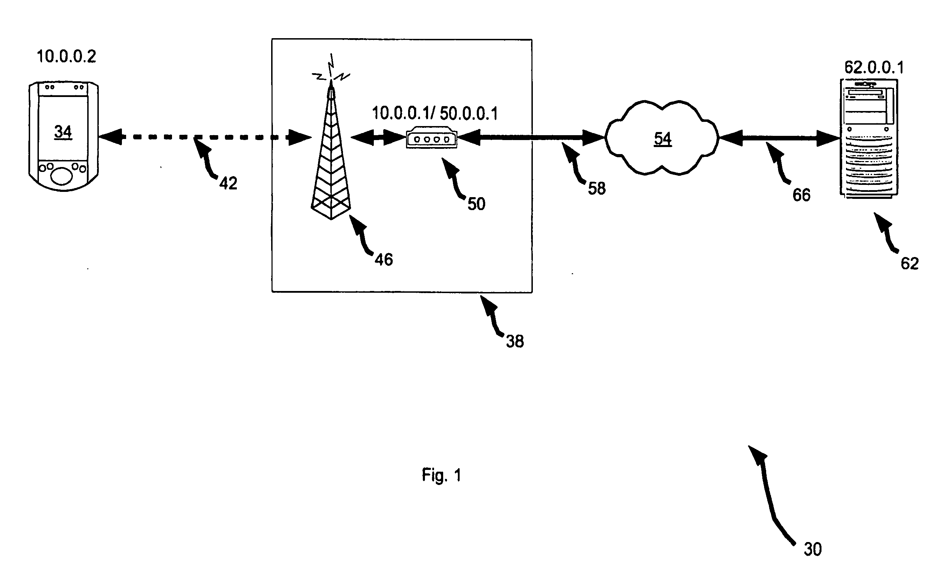

Referring now to Figure 1, a system for maintaining a persistent network connection is indicated generally at 30. In a present embodiment, system 30 includes at least one client 34 that connects to a service provider node 38 via a wireless link 42. Node 38 includes a wireless base station 46 that interacts with client 34 via link 42 and a NAT gateway 50. In turn, gateway 50 connects to the Internet 54 via a backhaul 58. Backhaul 58 can be a T1, T3 or any other suitable link for connecting node 38 to Internet 54. Internet 54, itself, connects to a web-server 62 via a second backhaul 66.

In a present embodiment, client 34 is a battery operated device that is based on the computing environment and functionality of a wireless personal digital assistant. It is, however, to be understood that client 34 need not be battery operated and/or can include the construction and functionality of other electronic devices, such as cell phones, smart telephones, desktop computers or laptops with wireless 802.11 or bluetooth capabilities or the like.

It is also to be understood that, at least a portion of the connection between client 34 and web-server 62 is bandwidth-constrained. In system 30, since link 42 is a wireless connection that may need to serve a plurality of clients 34, then link 42 is bandwidth constrained in relation to backhaul 58, backhaul 66 and the other elements that compose the connection between client 34 and web-server 62. Such bandwidth constraints can thus interfere with the speed with which a user operating clients 34 can access Internet 54 and web-server 62. Such constraints become particularly acute when a plurality of clients wish to access link 42. Furthermore, judicious use of link 42 by client 34 is desirable due to the fact that client 34 is battery operated.

NAT gateway 50 is based on standard NAT technology and thus allows a multiple number of clients 34 connected to node 38 to connect to Internet 54 though a public Internet Protocol ("IP") address assigned to NAT gateway 50. Accordingly, client 34 (and other clients connected to node 38) will typically have a private IP address, while NAT gateway 50 will have a public IP address accessible to any party on Internet 54. Thus, as client 34 accesses Internet 54, web-server 62 will communicate with client 34 via gateway 50, with gateway 50 "translating" IP addresses during such communication. In an example unique to the present embodiment, client 34 has the private IP address "10.0.0.2", gateway has the private IP address 10.0.0.1 and the public IP address of "50.0.0.1" and web-server has the public IP address "62.0.0.1".

Like existing NAT gateways, gateway 50 is thus also configured to automatically terminate idle connections between client 34 and Internet 54 in order to free-up resources for NAT gateway 50. Client 34 is configured to maintain a connection between client 34 and web-server 62 notwithstanding the automatic termination feature of gateway 50. More particularly, client 34 is configured to send keep-alive packets during an idle communication period to web-server 50 according to a variable criteria, such keep-alive packets being intended to prevent gateway 50 from dropping the connection between client 34 and web-server 50, but without changing the state of data in client 34 or web-server 62. Such keep-alive packets can be any suitable packet, that achieves this result, such as a "no-op" command, a command that generates a non critical error result in the server or a command designed into the application level protocol as a keep alive mechanism. In a present embodiment, the variable criteria is based on an time period that is arrived upon iteratively. The iterations are considered complete when a time period is established that is substantially close to the maximum amount of time that NAT gateway 50 will allow to lapse before terminating the connection between client 34 and web-server 50. Further understanding about client 34 and this criteria will provided below.

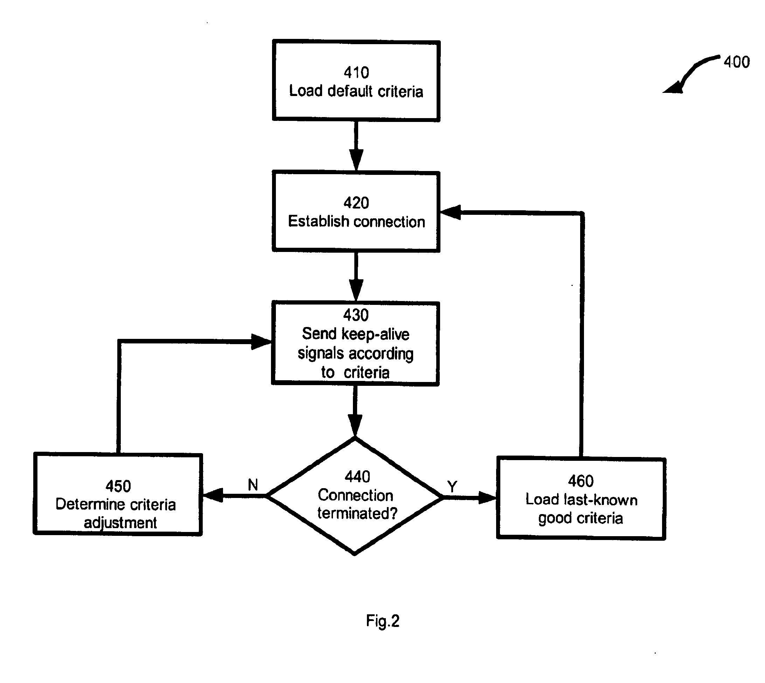

In order to help explain certain of these implementations and various other aspects of system 30, reference will now be made to Figure 2 which shows a method for maintaining a network connection and which is indicated generally at 400. In order to assist in the explanation of the method, it will be assumed that method 400 is operated by client 34 using system 30. However, it is to be understood that client 34, system 30 and/or method 400 can be varied, and need not work exactly as discussed herein in conjunction with each other, and that such variations are within the scope of the invention.

Before discussing method 400, it will be assumed that NAT gateway 50 is configured to drop connections where a connection is idle for greater than fifteen minutes (However, other time periods are also within the scope of the invention, according to the configuration of the particular NAT gateway. Such other time periods can be greater than twenty minutes, or greater than thirty minutes, or greater than ten minutes.) It will also be assumed that this timeout period is unknown to client 34 on invocation of method 400.

Beginning first at step 410, a set of default criteria is loaded. As will be discussed below, the default criteria that is loaded is used by client 34 to define an initial time period during which keep-alive packets that are sent by client 34 in order to prevent gateway 50 from dropping a connection between client 34 and an entity on Internet 54, but without changing the state of data in client 34 or that entity. In the present example, it will be assumed that the default criteria that is loaded will be a period of five minutes. (Other example default periods can be seven minutes, ten minutes and twelve minutes.)

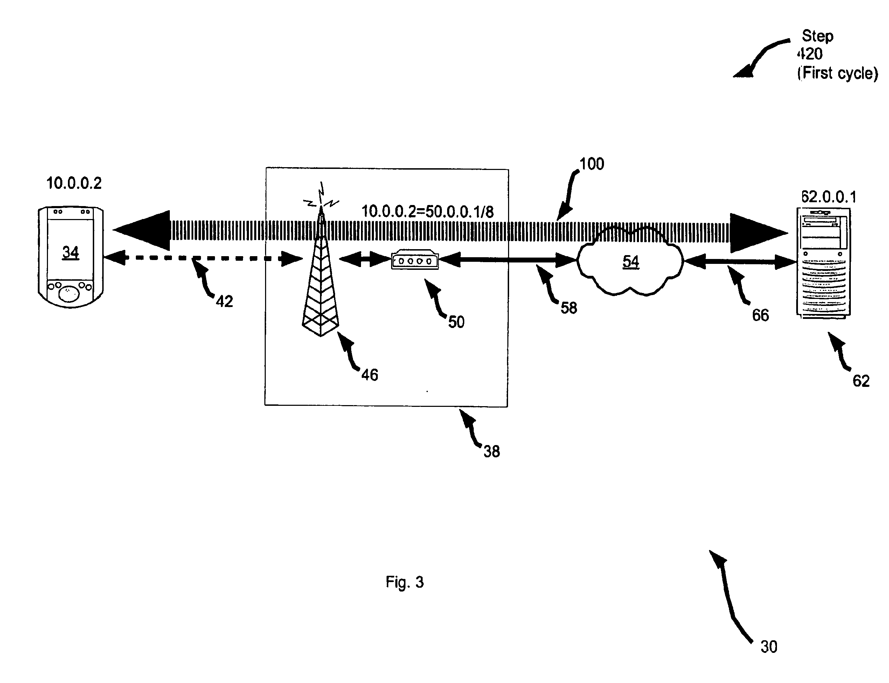

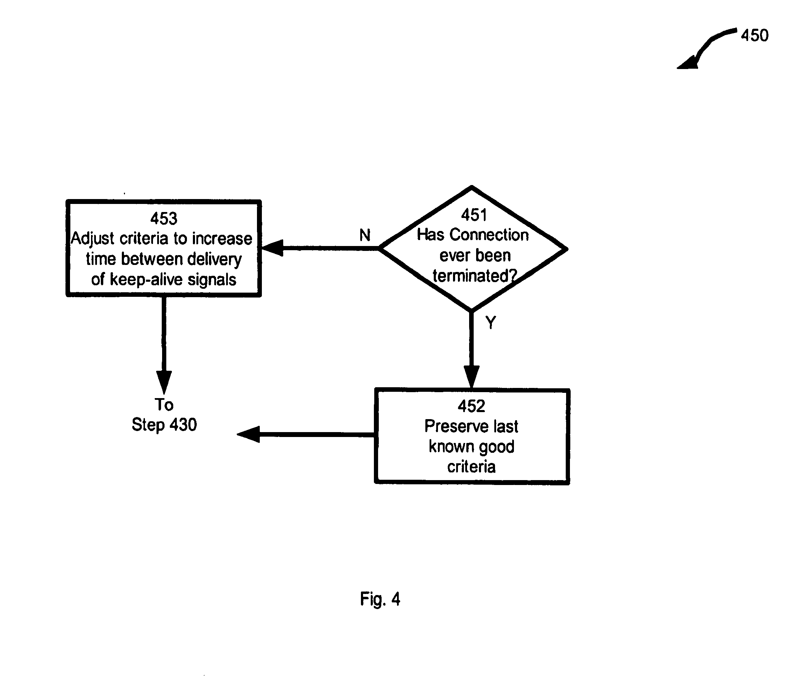

Next, at step 420, a connection is established. Continuing with the present example, it will be assumed that client 34 opens a connection with web-server 62. This example is represented in Figure 3, wherein a connection is represented by a dotted line indicated generally at 100. The connection is opened in the usual manner, such as by having a web-browser on client 34 open an HTTP web-page that is located on web-server 34. The establishment of connection 100 thus involves having NAT gateway 50 create a mapping of client 34's private IP address to gateway 50's own public IP address. This is represented in Figure 4 by having gateway 50 represent to web-server 62 that the public IP address of client 34 is "50.0.0.1/8", wherein "50.0.0.1" is gateway 50's own public IP address, while "/8" represents the individual port on gateway 50 that is mapped to client 34's private IP address of "10.0.0.2". Thus, traffic carried over connection 100 will be passed through gateway 50 using this mapping. Once connection 100 is opened, network traffic is sent thereover in the usual manner. In general, it is to be reemphasized that this is merely an example and the way in which a connection is established is not particularly limited.

Next, at step 430, keep-alive signals are sent according to the established criteria. Since the criteria that was established at step 410 is a period of five minutes, then at step 430 keep-alive signals will be sent from client 34 to web-server 62 every five minutes. Since these keep-alive signals pass through gateway 50, then gateway 50 will only perceive that connection 100 is idle for five minute periods. Since this five minute period is less than the fifteen minute timeout period that gateway 50 will await before terminating connection 100, then gateway 50 will not terminate connection 100 and thus connection 100 will be persistent.

Method 400 will then advance to step 440, at which point a determination is made as to whether the connection established at step 420 has been terminated. Since the five minute interval during which client 34 sends keep-alive signals to web-server 62 is less than the previously mentioned fifteen minute timeout period, connection 100 will not be terminated and so it will be determined at step 440 that "no", connection 100 as not been terminated and method 400 will advance to step 450.

At step 450, an adjustment, if any, to the criteria used at step 430 will determined. In a present embodiment, step 450 is carried out over a number of sub-steps, indicated generally at 450 on Figure 4. At step 451, it is determined whether the connection has ever been terminated. If there has been a prior termination, then the method advances to step 452 and the last known good criteria is maintained, and thus no adjustment is made to the criteria. At this point the method returns to step 430 on Figure 2.

However, if at step 451 it is determined that there has been no prior termination of the connection, then the method advances to step 453 and an adjustment is made to increase the time between delivery of the keep-alive signals. Thus, in the example being discussed herein in relation to connection 100, it will be determined at step 451 that connection has never been terminated, and the method will advance from step 451 to step 4523. At step 453, the criteria will be adjusted to increase the amount of time between delivery of keep-alive signals. The amount and/or rate by which the increase is made at step 453 is not particularly limited. In accordance with the present example, it will be assumed that the time interval will be increased by one-minute each time method 400 advances to step 453. Accordingly, during this cycle through method 400, the time period will be increased to six minutes from five minutes.

The method then advances from step 453 back to step 430, at which point the keep-alive signals are sent according to the criteria that has been established at step 453. Since the criteria that was established at step 453 is a period of six minutes, then at step 430 keep-alive signals will be sent from client 34 to web-server 62 every six minutes. Since these keep-alive signals pass through gateway 50, then gateway 50 will only perceive that connection 100 is idle for six minute periods. Since this six minute period is less than the fifteen minute timeout period that gateway 50 will await before terminating connection 100, then gateway 50 will not terminate connection 100 and thus connection 100 will be persistent.

Method 400 will thus continue cycle through steps 430, 440 and 450 (i.e. sub-steps 451 and 453) as previously mentioned until the criteria established at step 453 finally adjusts the time interval beyond the timeout period of gateway 50. More specifically, once at step 453 a time period of sixteen minutes is established, then during the next cycle through step 430 the keep-alive signal will be sent outside the fifteen minute time-out period, and thus connection 100 will be terminated.

This time, when method 400 reaches step 440, it will be determined that connection 100 has been terminated, and thus method 400 will advances from step 440 to step 460, at which point the last-known good criteria will be loaded. In the present example, the last-known good criteria that was established previously at step 453 will be the time interval of fifteen minutes, and thus at step 460, in this example, client 34 will load the time period of fifteen minutes as the criteria.

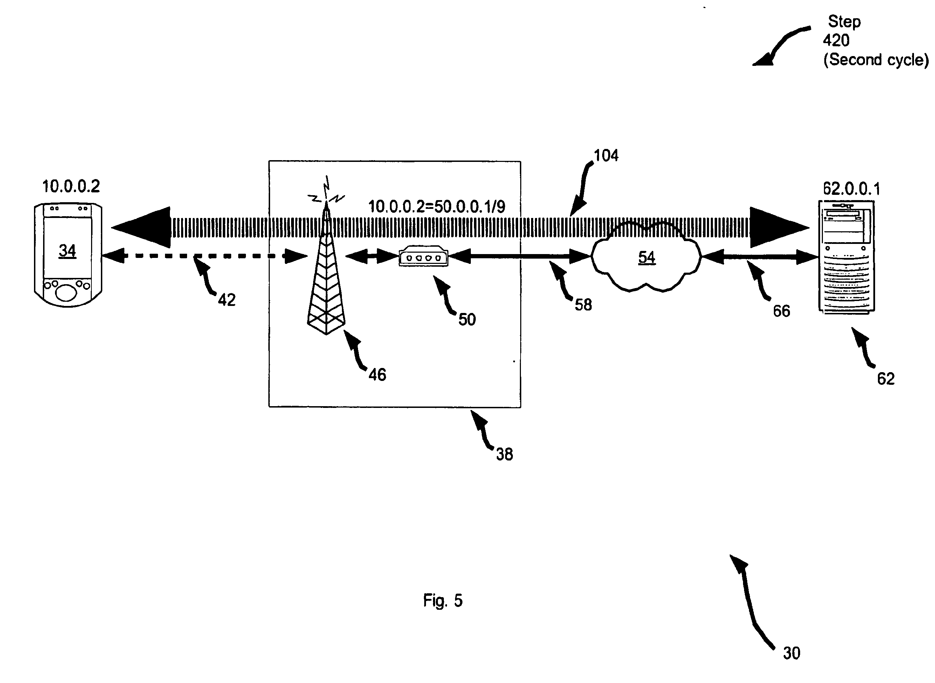

Method 400 then advances from step 460 to step 420 at which point the connection is established (i.e. re-established). Continuing with the present example, it will be assumed that client 34 reopens a connection with web-server 62. This example is represented in Figure 5, wherein a new connection is represented by a dotted line indicated generally at 104. The connection is opened in the usual manner, such as by having a web-browser on client 34 open an HTTP web-page that is located on web-server 34. The establishment of connection 100 thus involves having NAT gateway 50 create a mapping of client 34's private IP address to gateway 50's own public IP address. This is represented in Figure 4 by having gateway 50 represent to web-server 62 that the public IP address of client 34 is "50.0.0.1/9", wherein "50.0.0.1" is gateway 50's own public IP address, while "/9" represents the individual port on gateway 50 that is mapped to client 34's private IP address of "10.0.0.2". Thus, traffic carried over connection 104 will be passed through gateway 50 using this mapping. Once connection 104 is opened, network traffic is sent thereover in the usual manner.

Method 400 then advances to step 430, at which point the keep-alive signals are sent according to the criteria that has been established at step 460. Since the criteria that was established at step 460 is a period of fifteen minutes, then at step 430 keep-alive signals will be sent from client 34 to web-server 62 every fifteen minutes. Since these keep-alive signals pass through gateway 50, then gateway 50 will only perceive that connection 104 is idle for fifteen minute periods. Since this fifteen minute period is acceptable according to the fifteen minute timeout period that gateway 50 will await before terminating connection 104, then gateway 50 will not terminate connection 100 and thus connection 104 will be persistent.

Method 400 will then advance from step 430 to step 440, at which point a determination is made as to whether the connection established at step 420 has been terminated. Since the fifteen minute interval during which client 34 sends keep-alive signals to web-server 62 is acceptable in relation to the fifteen minute timeout period, connection 104 will not be terminated and so it will be determined at step 440 that "no", connection 104 as not been terminated and method 400 will advance to step 450.

At step 450, an adjustment, if any, to the criteria used at step 430 will determined. Recall that in a present embodiment step 450 is carried out over a number of sub-steps, indicated generally at 450 on Figure 4. At step 451, it is determined whether the connection has ever been terminated. Since the connection between client 34 and web-server 62 has been terminated once already (i.e. since connection 100 was terminated), then the method advances to step 452 and the last known good criteria is maintained, and thus no adjustment is made to the criteria. More specifically, since it is known that the fifteen minute time interval is an acceptable criteria, this criteria is maintained and at this point the method returns to step 430 on Figure 2.

Back at step 430, at which point the keep-alive signals are thus sent according to the criteria preserved at step 452. Since the criteria that was established at step 452 is a period of fifteen minutes, then at step 430 keep-alive signals will be sent from client 34 to web-server 62 every fifteen minutes. Since these keep-alive signals pass through gateway 50, then gateway 50 will only perceive that connection 104 is idle for fifteen minute periods, within the accepted fifteen minute timeout period that gateway 50 will await before terminating connection 100. Thus gateway 50 will not terminate connection 104 and thus connection 104 will be persistent. Method 400 will thus continue cycle as long as needed to maintain a connection between client 34 and web-server 62 during idle period.

It should now be apparent that a change in routing of connection 104 (or other change in the physical link between client 34 and web-server 62) could cause the timeout period to change -- i.e. decrease over time from the time period that had been previously established through earlier cycles through method 400. For example, if another router in Internet 54 is introduced into the pathway that carries connection 104, and where that router drops idle connections after ten minutes, then method 400 may at various times cycle through step 460 and thereby the connection between client 34 and web-server 62 may be torn down and reestablished several times until at step 460 the criteria is decreased back to a ten minute interval. It is thus contemplated that step 460 can include sub-steps that will continue to decrease the criteria to shorter and shorter time periods until the shortest timeout period for any equipment along the physical link between client 34 and web-server 62 is established, at which point that shortest timeout period will be used at step 430. In this manner, it is contemplated that the criteria used at step 430 may at various times decrease or increase according to the timeout behaviours of the equipment that forms the physical link between client 34 and web-server 62.

Also, it is to be understood that, in other embodiments of the invention, normal spurious connection timeouts can be handled by a suitably modified version of method 400. Such a modified version of method 400 can be configured to respond to such spurious connection timeouts. For example a form of weighting or hysteresis can be utilized in a suitably modified version of method 400 that favours time-intervals for delivering keep-alive signals that client 34 has previously found effective in reducing the likelihood connection 104 being terminated.

It should also be understood that the rates by which the criteria is adjusted at step 450 and step 460 is not particularly limited. Further, the type of criteria that is used need not be particularly limited. For example the changes in criteria at step 450 and 460 need not be in a linear fashion, and need not be based on simple minute-by-minute increments or decrements. For example, a logarithmic convergence, based on splitting the various time intervals in half, using Newton's Method can be used. As an additional example, it can be desired at steps 450 and step 460 to consider the remaining battery life of client 34, and thus where the battery of client 34 has a long period of remaining life, the criteria adjustment made at step 450 need not be as aggressive. However, where the battery of client 34 has a short period of remaining life, the criteria adjustment made at step 450 may aggressively attempt to have the criteria reach the idle timeout period as fast as possible in order to preserve the battery life of client 34.

While only specific combinations of the various features and components of the invention have been discussed herein, it will be apparent to those of skill in the art that desired subsets of the disclosed features and components and/or alternative combinations of these features and components can be utilized, as desired. For example, while not necessary, it is typically contemplated that steps 430-460 are only invoked during time periods that client 34 is aware that connection 100 (or connection 104) is idle, and so method 400 can be modified to cause steps 430-460 to be performed only during those time periods when connection 100 (or connection 104) is idle.

Furthermore, it is also to be understood that the origin of the keep-alive packets need not be restricted to client 34. For example, where base station 46 is aware of the need to maintain connection 100 as persistent, then it can be desired to have base station 46 perform steps 430-460 on behalf of client 34 and thereby free up resources on client 34 and link 42. By the same token, it is contemplated that steps 430-460 could also be conducted by web-server 62 on behalf of client 34.

In another variation of the invention, it is contemplated that steps 430-460 can be performed by client 34 prior to the establishment of a connection, and thereby determine the appropriate criteria for sending keep-alive signals within the timeout period prior to establishment of the connection and thereby reduce likelihood of termination of the connection. Further, once this timeout period is established, it is contemplated that the period can be reported to other clients attached to node 38, thereby obviating the need for those clients to perform steps 430-460 themselves.

While system 30 is directed to a specific type of network, it should be understood that other types of clients, servers, and networks can be used. For example, the invention can be applied to peer-to-peer connections and need not be limited to client/server type relationships. Furthermore the type of physical connections that carry the connection are not limited, and can be based on Ethernet, Intranets, 802.11, bluetooth etc. Additionally, while the embodiments herein are discussed in relation to connections over which at least a portion are bandwidth constrained, it should be understood that the invention is also applicable to connections that are not bandwidth constrained.

The above-described embodiments of the invention are intended to be examples and alterations and modifications may be effected thereto, by those of skill in the art, without departing from the scope of the invention which is defined solely by the claims appended hereto.

## Claims

1. An electronic device (34) having a network interface for communicating with a Second device (62) via a network connection (30, 100, 104) carried by a physical link (58, 66) that includes equipment (50) for terminating said network connection if said network connection remains idle according to a predefined time-out criterion of said equipment (50), said device being arranged to send keep-alive signals on said connection;
**characterized in that** said electronic device (34) has means for sending said keep-alive signals according to a plurality of different time intervals to determine said predefined time-out criterion of said equipment (50).

2. The device of to claim 1, wherein the means for sending keep-alive signals is arranged to determine when one of said time intervals results in said equipment (50) terminating said connection thereby determining said predetermined time-out criterion of said equipment (50).

3. The device of claim 1 or 2, wherein said device (34) has means for requesting an HTTP web-page to thereby establish a connection (30, 100, 104) with the second device (62) and wherein the means for sending keep-alive signals is arranged to send no-op signals.

4. The device of any of claims 1 to 3, wherein said criterion is a predefined time period.

5. The device of claim 4, wherein said device (34) has means to determine said predefined time period, said means comprising:
means for establishing said connection (30, 100, 104) with an initial default time period;
means for sending a keep-alive signal to said second device (62) once during said time period;
means for increasing said time period if said time period does not cause said connection to be dropped then repeating said sending step; and
means for maintaining a last-known good time period if said time period does cause said connection to be dropped and then reestablishing said connection (104) and returning to said sending step; wherein
said device (34) is arranged to send keep-alive signals to said second device (62), and to vary said time period for sending said keep-alive signals over said connection (30) during said time period for each iteration until one such time period causes said equipment (50) to terminate said connection (30).

6. The device of any of claims 1 to 5, wherein said device (34) is a client device, said second device (62) is a web-server and at least a portion (58, 66) of said link includes the Internet (54).

7. The device of any of claims 1 to 6, wherein said device (34) is battery operated and has means for reducing battery consumption while determining said predefined time-out criterion, said means being arranged to increase the keep-alive signal time intervals more quickly as said battery life is depleted.

8. The device of any of claims 1 to 7, wherein said device (34) is a wireless device and at least a portion (42) of said link (42, 58, 66) includes a wireless connection from said wireless device to the Internet (54).

9. The device of any of claims 1 to 8, wherein said device (34) is arranged to establish a network connection (30, 100, 104) via a Network Address Translation (NAT) router (50), said NAT router comprising said network connection terminating equipment (50).

10. A method of determining a predefined time-out criterion in an electronic device having a network interface for communicating with a second device (62) via a network connection (30, 100, 104) carried by a physical link (58, 66) that includes equipment (50) for terminating said network connection if said network connection remains idle according to a predefined time-out criterion of said equipment (50) said device being arranged to send keep-alive signals on said connection,
the method being **characterized in that** it comprises sending said keep-alive signals from the device (34) to the equipment (50) according to a plurality of different time intervals to determine said predefined time-out criterion of said equipment (50).

11. The method of to claim 10, wherein it includes the step of determining when one of said time intervals results in said equipment (50) terminating said connection thereby determining said predetermined time-out criterion of said equipment (50).

12. The method of claim 10 or 11, wherein it includes requesting an HTTP web-page to thereby establish a connection (30, 100, 104) with the second device (62) and sending no-op signals as the keep-alive signals.

13. The method of any of claims 10 to 12, wherein said criterion is a predefined time period.

14. The method of claim 13, wherein it includes determining said predefined time period by:
establishing said connection (30, 100, 104) with an initial default time period;
sending a keep-alive signal to said second device (62) once during said time period;
increasing said time period if said time period does not cause said connection to be dropped then repeating said sending step; and
maintaining a last-known good time period if said time period does cause said connection to be dropped and then reestablishing said connection (104) and returning to said sending step;
during which said device (34) is sending keep-alive signals to said second device (62), and varying said time period for sending said keep-alive signals over said connection (30) during said time period for each iteration until one such time period causes said equipment (50) to terminate said connection (30).

15. The method of any of claims 10 to 14, wherein said device (34) is a client device, said second device (62) is a web-server and at least a portion (58, 66) of said link includes the Internet (54).

16. The method of any of claims 10 to 15, wherein said device (34) is battery operated and has means for reducing battery consumption while determining said predefined time-out criterion, the method including increasing the keep-alive signal time intervals more quickly as said battery life is depleted.

17. The method of any of claims 10 to 16, wherein said device (34) is a wireless device and at least a portion (42) of said link (42, 58, 66) includes a wireless connection from said wireless device to the Internet (54).

18. The method of any of claims 10 to 17, wherein said device (34) is arranged to establish a network connection (30, 100, 104) via a Network Address Translation (NAT) router (50), said NAT router comprising said network connection terminating equipment (50).

19. The method according to any of claims 10 to 18, wherein said last known timeout criteria is determined by iteratively decreasing said timeout criteria until said connection is no longer being terminated.

20. A computer-readable storage medium containing code means for the device of any of claims 1 to 9 for carrying out the steps of the method of any of claims 10 to 19.

21. A system comprising a first electronic device (34) having a network interface for participating in a network connection (30, 100, 104), said device being arranged to send keep-alive signals on said connection; a second device (62) having a network interface for participating in said network connection; said network connection having a physical link (58, 66) that includes an equipment (50) for terminating said network connection if said network connection remains idle according to a predefined time-out criterion of said equipment;
**characterized in that** said first electronic device (34) has means for sending said keep-alive signals according to a plurality of different time intervals to determine said predefined time-out criterion of said equipment (50).

## Patentansprüche

1. Ein elektronisches Gerät (34) mit einer Netzwerkschnittstelle zur Kommunikation mit einem zweiten Gerät (62) über eine Netzwerkverbindung (30, 100, 104), die über einen physischen Link (58, 66) abgewickelt wird, der Ausrüstung (50) zum Beenden der Netzwerkverbindung enthält, wenn die Netzwerkverbindung entsprechend einem vordefinierten Timeout-Kriterium der Ausrüstung (50) im Leerlauf bleibt, wobei das Gerät so eingerichtet ist, dass es Keep-Alive-Signale über die Verbindung sendet;
**dadurch gekennzeichnet, dass** das elektronische Gerät (34) über Mittel zum Senden der Keep-Alive-Signale entsprechend einer Vielzahl von unterschiedlichen Zeitintervallen verfügt, um das vordefinierte Timeout-Kriterium der Ausrüstung (50) zu ermitteln.

2. Das Gerät gemäß Anspruch 1, wobei das Mittel zum Senden von Keep-Alive-Signalen so eingerichtet ist, dass es ermittelt, wenn eines der Zeitintervalle bewirkt, dass die Ausrüstung (50) die Verbindung beendet, wodurch das vordefinierte Timeout-Kriterum der Ausrüstung (50) ermittelt wird.

3. Das Gerät gemäß Anspruch 1 oder 2, wobei das Gerät (34) über Mittel zum Anfordern einer HTTP-Webseite verfügt, um **dadurch** eine Verbindung (30, 100, 104) mit dem zweiten Gerät (62) herzustellen, und wobei das Mittel zum Senden von Keep-Alive-Signalen zum Senden von Nulloperationssignalen eingerichtet ist.

4. Das Gerät gemäß jedem der Ansprüche 1 bis 3, wobei das Kriterium eine vordefinierte Zeitspanne ist.

5. Das Gerät gemäß Anspruch 4, wobei das Gerät (34) über Mittel zum Ermitteln der vordefinierten Zeitspanne verfügt und dieses Mittel umfasst:
Mittel zum Herstellen der Verbindung (30, 100, 104) mit einer anfänglichen Standardzeitspanne;
Mittel zum einmaligen Senden eines Keep-Alive-Signals zu dem zweiten Gerät (62) während dieser Zeitspanne;
Mittel zum Erhöhen dieser Zeitspanne, wenn diese Zeitspanne nicht bewirkt, dass die Verbindung fallengelassen wird, und dann zum Wiederholen des Sendeschritts; und
Mittel zum Beibehalten einer zuletzt bekannten guten Zeitspanne, wenn diese Zeitspanne bewirkt, dass die Verbindung fallengelassen wird, und dann zum Wiederherstellen der Verbindung (104) und zum Zurückkehren zum Sendeschritt; wobei
das Gerät (34) so eingerichtet ist, dass es Keep-Alive-Signale zum zweiten Gerät (62) sendet und dass es die Zeitspanne für das Senden der Keep-Alive-Signale über die Verbindung (30) während der Zeitspanne für jede Iteration variiert, bis eine solche Zeitspanne bewirkt, dass die Ausrüstung (50) die Verbindung (30) beendet.

6. Das Gerät gemäß jedem der Ansprüche 1 bis 5, wobei das Gerät (34) ein Client-Gerät ist, das zweite Gerät (62) ein Webserver ist und mindestens ein Abschnitt (58, 66) des Links das Internet (54) einschließt.

7. Das Gerät gemäß jedem der Ansprüche 1 bis 6, wobei das Gerät (34) batteriebetrieben ist und über Mittel zur Senkung des Batterieverbrauchs verfügt, während das vordefinierte Timeout-Kriterium ermittelt wird, wobei das Mittel so eingerichtet ist, dass es die Zeitintervalle der Keep-Alive-Signale schneller erhöht, je mehr die Batterielebensdauer verbraucht wird.

8. Das Gerät gemäß jedem der Ansprüche 1 bis 7, wobei das Gerät (34) ein Drahtlosgerät ist und mindestens ein Abschnitt (42) des Links (42, 58, 66) eine Drahtlosverbindung von dem Drahtlosgerät zum Internet (54) einschließt.

9. Das Gerät gemäß jedem der Ansprüche 1 bis 8, wobei das Gerät (34) so eingerichtet ist, dass es eine Netzwerkverbindung (30, 100, 104) über einen NAT-Router (Network Address Translation) (50) herstellt, wobei der NAT-Router die Ausrüstung (50) zum Beenden der Netzwerkverbindung umfasst.

10. Ein Verfahren zum Ermitteln eines vordefinierten Timeout-Kriteriums in einem elektronischen Gerät mit einer Netzwerkschnittstelle zur Kommunikation mit einem zweiten Gerät (62) über eine Netzwerkverbindung (30, 100, 104), die über einen physischen Link (58, 66) abgewickelt wird, der Ausrüstung (50) zum Beenden der Netzwerkverbindung enthält, wenn die Netzwerkverbindung entsprechend einem vordefinierten Timeout-Kriterium der Ausrüstung (50) im Leerlauf bleibt, wobei das Gerät so eingerichtet ist, dass es Keep-Alive-Signale über die Verbindung sendet,
und das Verfahren **dadurch gekennzeichnet ist, dass** es das Senden von Keep-Alive-Signalen vom Gerät (34) zur Ausrüstung (50) entsprechend einer Vielzahl von unterschiedlichen Zeitintervallen umfasst, um das vordefinierte Timeout-Kriterium der Ausrüstung (50) zu ermitteln.

11. Das Verfahren gemäß Anspruch 10, wobei es den Schritt des Ermittelns einschließt, wenn eines der Zeitintervalle bewirkt, dass die Ausrüstung (50) die Verbindung beendet, wodurch das vordefinierte Timeout-Kriterum der Ausrüstung (50) ermittelt wird.

12. Das Verfahren gemäß Anspruch 10 oder 11, wobei es das Anfordern einer Anfordern einer HTTP-Webseite einschließt, um **dadurch** eine Verbindung (30, 100, 104) mit dem zweiten Gerät (62) herzustellen, sowie das Senden von Nulloperationssignalen als Keep-Alive-Signale einschließt.

13. Das Verfahren gemäß jedem der Ansprüche 10 bis 12, wobei das Kriterium eine vordefinierte Zeitspanne ist.

14. Das Verfahren gemäß Anspruch 13, wobei es das Ermitteln der vordefinierten Zeitspanne durch Folgendes einschließt:
Herstellen der Verbindung (30, 100, 104) mit einer anfänglichen Standardzeitspanne;
Einmaliges Senden eines Keep-Alive-Signals zu dem zweiten Gerät (62) während dieser Zeitspanne;
Erhöhen dieser Zeitspanne, wenn diese Zeitspanne nicht bewirkt, dass die Verbindung fallengelassen wird, und dann Wiederholen des Sendeschritts; und
Beibehalten einer zuletzt bekannten guten Zeitspanne, wenn diese Zeitspanne bewirkt, dass die Verbindung fallengelassen wird, und dann Wiederherstellen der Verbindung (104) und Zurückkehren zum Sendeschritt;
während dem das Gerät (34) Keep-Alive-Signale zum zweiten Gerät (62) sendet und die Zeitspanne für das Senden der Keep-Alive-Signale über die Verbindung (30) während der Zeitspanne für jede Iteration variiert, bis eine solche Zeitspanne bewirkt, dass die Ausrüstung (50) die Verbindung (30) beendet.

15. Das Verfahren gemäß jedem der Ansprüche 10 bis 14, wobei das Gerät (34) ein Client-Gerät ist, das zweite Gerät (62) ein Webserver ist und mindestens ein Abschnitt (58, 66) des Links das Internet (54) einschließt.

16. Das Verfahren gemäß jedem der Ansprüche 10 bis 15, wobei das Gerät (34) batteriebetrieben ist und über Mittel zur Senkung des Batterieverbrauchs verfügt, während das vordefinierte Timeout-Kriterium ermittelt wird, wobei das Verfahren das schnellere Erhöhen der Zeitintervalle der Keep-Alive-Signale einschließt, je mehr die Batterielebensdauer verbraucht wird.

17. Das Verfahren gemäß jedem der Ansprüche 10 bis 16, wobei das Gerät (34) ein Drahtlosgerät ist und mindestens ein Abschnitt (42) des Links (42, 58, 66) eine Drahtlosverbindung von dem Drahtlosgerät zum Internet (54) einschließt.

18. Das Verfahren gemäß jedem der Ansprüche 10 bis 17, wobei das Gerät (34) so eingerichtet ist, dass es eine Netzwerkverbindung (30, 100, 104) über einen NAT-Router (Network Address Translation) (50) herstellt, wobei der NAT-Router die Ausrüstung (50) zum Beenden der Netzwerkverbindung umfasst.

19. Das Verfahren gemäß jedem der Ansprüche 10 bis 18, wobei das zuletzt bekannte Timeout-Kriterium ermittelt wird, indem das Timeout-Kriterium iterativ verringert wird, bis die Verbindung nicht mehr beendet wird.

20. Ein computerlesbares Speichermedium, das Codemittel für das Gerät gemäß jedem der Ansprüche 1 bis 9 zum Ausführen der Schritte des Verfahrens gemäß jedem der Ansprüche 10 bis 19 enthält.

21. Ein System, umfassend ein erstes elektronisches Gerät (34) mit einer Netzwerkschnittstelle zur Teilnahme an einer Netzwerkverbindung (30, 100, 104), wobei das Gerät so eingerichtet ist, dass es Keep-Alive-Signale über die Verbindung sendet; ein zweites Gerät (62) mit einer Netzwerkschnittstelle zur Teilnahme an der Netzwerkverbindung; wobei diese Netzwerkverbindung einen physischen Link (58, 66) hat, der eine Ausrüstung (50) zum Beenden der Netzwerkverbindung einschließt, wenn die Netzwerkverbindung entsprechend einem vordefinierten Timeout-Kriterium der Ausrüstung im Leerlauf bleibt;
**dadurch gekennzeichnet, dass** das erste elektronische Gerät (34) über Mittel zum Senden der Keep-Alive-Signale entsprechend einer Vielzahl von unterschiedlichen Zeitintervallen verfügt, um das vordefinierte Timeout-Kriterium der Ausrüstung (50) zu ermitteln.

## Revendications

1. Un dispositif électronique (34) comportant une interface de réseau destinée à communiquer avec un second dispositif (62) par l'intermédiaire d'une connexion de réseau (30, 100, 104) portée par un lien physique (58, 66) qui comprend un équipement (50) destiné à mettre un terme à ladite connexion de réseau si ladite connexion de réseau demeure inactive selon un critère de temporisation prédéfini dudit équipement (50), ledit dispositif étant agencé pour envoyer des signaux de maintien en activité sur ladite connexion ;
**caractérisé en ce que** ledit dispositif électronique (34) comporte un moyen permettant d'envoyer lesdits signaux de maintien en activité selon une pluralité d'intervalles de temps différents pour déterminer ledit critère de temporisation prédéfini dudit équipement (50).

2. Dispositif selon la revendication 1, dans lequel le moyen permettant d'envoyer des signaux de maintien en activité est agencé pour déterminer quand un desdits intervalles de temps a pour conséquence que ledit équipement (50) met un terme à ladite connexion, déterminant ainsi ledit critère de temporisation prédéterminé dudit équipement (50).

3. Dispositif selon la revendication 1 ou 2, dans lequel ledit dispositif (34) comporte un moyen permettant de demander une page Web HTTP pour ainsi établir une connexion (30, 100, 104) avec le second dispositif (62) et dans lequel le moyen permettant d'envoyer des signaux de maintien en activité est agencé pour envoyer des signaux ineffectifs.

4. Dispositif selon l'une quelconque des revendications 1 à 3, dans lequel ledit critère est une période de temps prédéfinie.

5. Dispositif selon la revendication 4, dans lequel ledit dispositif (34) comporte un moyen permettant de déterminer ladite période de temps prédéfinie, ledit moyen comprenant :
un moyen permettant d'établir ladite connexion (30, 100, 104) avec une période de temps par défaut initiale ;
un moyen permettant d'envoyer un signal de maintien en activité audit second dispositif (62) une fois pendant ladite période de temps ;
un moyen permettant d'augmenter ladite période de temps si ladite période de temps n'entraîne pas l'abandon de ladite connexion, puis la répétition de ladite étape d'envoi ; et
un moyen permettant de maintenir une dernière période de temps correcte connue si ladite période de temps entraîne l'abandon de ladite connexion, puis de rétablir ladite connexion (104) et de revenir à ladite étape d' envoi ; dans lequel
ledit dispositif (34) est agencé pour envoyer des signaux de maintien en activité audit second dispositif (62) et pour faire varier ladite période de temps pour envoyer lesdits signaux de maintien en activité sur ladite connexion (30) pendant ladite période de temps pour chaque itération jusqu'à ce qu'une desdites périodes de temps ait pour conséquence que ledit équipement (50) mette un terme à ladite connexion (30).

6. Dispositif selon l'une quelconque des revendications 1 à 5, dans lequel ledit dispositif (34) est un dispositif client, ledit second dispositif (62) est un serveur Web et au moins une partie (58, 66) dudit lien inclut l'Internet (54).

7. Dispositif selon l'une quelconque des revendications 1 à 6, dans lequel ledit dispositif (34) fonctionne avec une batterie et comporte un moyen permettant de réduire la consommation de la batterie tout en déterminant ledit critère de temporisation prédéfini, ledit moyen étant agencé pour augmenter les intervalles de temps entre les signaux de maintien en activité plus rapidement au fur et à mesure que la durée de vie de la batterie diminue.

8. Dispositif selon l'une quelconque des revendications 1 à 7, dans lequel ledit dispositif (34) est un dispositif sans fil et au moins une partie (42) dudit lien (42, 58, 66) comprend une connexion sans fil dudit dispositif sans fil à l'Internet (54).

9. Dispositif selon l'une quelconque des revendications 1 à 8, dans lequel ledit dispositif (34) est agencé pour établir une connexion de réseau (30, 100, 104) par l'intermédiaire d'un routeur de traduction d'adresses de réseau (NAT) (50), ledit routeur NAT comprenant ledit équipement permettant de mettre un terme à la connexion de réseau (50).

10. Un procédé de détermination d'un critère de temporisation prédéfini dans un dispositif électronique comportant une interface de réseau destinée à communiquer avec un second dispositif (62) par l'intermédiaire d'une connexion de réseau (30, 100, 104) portée par un lien physique (58, 66) qui comprend un équipement (50) destiné à mettre un terme à ladite connexion de réseau si ladite connexion de réseau demeure inactive selon un critère de temporisation prédéfini dudit équipement (50), ledit dispositif étant agencé pour envoyer des signaux de maintien en activité sur ladite connexion,
le procédé étant **caractérisé en ce qu'**il comprend l'envoi desdits signaux de maintien en activité du dispositif (34) à l'équipement (50) selon une pluralité d'intervalles de temps différents pour déterminer ledit critère de temporisation prédéfini dudit équipement (50).

11. Procédé selon la revendication 10 comprenant l'étape consistant à déterminer quand un desdits intervalles de temps a pour conséquence que ledit équipement (50) met un terme à ladite connexion, déterminant ainsi ledit critère de temporisation prédéterminé dudit équipement (50).

12. Procédé selon la revendication 10 ou 11 comprenant la demande d'une page Web HTTP pour ainsi établir une connexion (30, 100, 104) avec le second dispositif (62) et l'envoi de signaux ineffectifs comme signaux de maintien en activité.

13. Procédé selon l'une quelconque des revendications 10 à 12, dans lequel ledit critère est une période de temps prédéfinie.

14. Procédé selon la revendication 13 comprenant la détermination de ladite période de temps prédéfinie en :
établissant ladite connexion (30, 100, 104) avec une période de temps par défaut initiale ;
envoyant un signal de maintien en activité audit second dispositif (62) une fois pendant ladite période de temps ;
augmentant ladite période de temps si ladite période de temps n'entraîne pas l'abandon de ladite connexion, puis en répétant ladite étape d'envoi ; et
maintenant une dernière période de temps correcte connue si ladite période de temps entraîne l'abandon de ladite connexion, puis en rétablissant ladite connexion (104) et en revenant à ladite étape d' envoi ;
pendant lequel ledit dispositif (34) envoie des signaux de maintien en activité audit second dispositif (62) et fait varier ladite période de temps pour envoyer lesdits signaux de maintien en activité sur ladite connexion (30) pendant ladite période de temps pour chaque itération jusqu'à ce qu'une desdites périodes de temps ait pour conséquence que ledit équipement (50) mette un terme à ladite connexion (30).

15. Procédé selon l'une quelconque des revendications 10 à 14, dans lequel ledit dispositif (34) est un dispositif client, ledit second dispositif (62) est un serveur Web et au moins une partie (58, 66) dudit lien inclut l'Internet (54).

16. Procédé selon l'une quelconque des revendications 10 à 15, dans lequel ledit dispositif (34) fonctionne avec une batterie et comporte un moyen permettant de réduire la consommation de la batterie tout en déterminant ledit critère de temporisation prédéfini, le procédé comprenant l'augmentation des intervalles de temps entre les signaux de maintien en activité plus rapidement au fur et à mesure que ladite durée de vie de la batterie diminue.

17. Procédé selon l'une quelconque des revendications 10 à 16, dans lequel ledit dispositif (34) est un dispositif sans fil et au moins une partie (42) dudit lien (42, 58, 66) comprend une connexion sans fil dudit dispositif sans fil à l'Internet (54).

18. Procédé selon l'une quelconque des revendications 10 à 17, dans lequel ledit dispositif (34) est agencé pour établir une connexion de réseau (30, 100, 104) par l'intermédiaire d'un routeur de traduction d'adresses de réseau (NAT) (50), ledit routeur NAT comprenant ledit équipement permettant de mettre un terme à la connexion de réseau (50).

19. Procédé selon l'une quelconque des revendications 10 à 18, dans lequel ledit dernier critère de temporisation connu est déterminé en diminuant de manière itérative ledit critère de temporisation jusqu'à ce qu'il ne soit plus mis un terme à ladite connexion.

20. Un support de stockage lisible par ordinateur contenant un moyen de codage pour le dispositif selon l'une quelconque des revendications 1 à 9 pour effectuer les étapes du procédé selon l'une quelconque des revendications 10 à 19.

21. Un système comprenant un premier dispositif électronique (34) ayant une interface de réseau permettant de participer à une connexion de réseau (30, 100, 104), ledit dispositif étant agencé pour envoyer des signaux de maintien en activité sur ladite connexion ; un second dispositif (62) ayant une interface de réseau pour participer à ladite connexion de réseau ; ladite connexion de réseau ayant un lien physique (58, 66) qui inclut un équipement (50) permettant de mettre un terme à ladite connexion de réseau si ladite connexion de réseau demeure inactive selon un critère de temporisation prédéfini dudit équipement ;
**caractérisé en ce que** ledit premier dispositif électronique (34) comporte un moyen permettant d'envoyer lesdits signaux de maintien en activité à une pluralité d'intervalles de temps différents pour déterminer ledit critère de temporisation prédéfini dudit équipement (50).
